# EUROPEAN PATENT APPLICATION

(11) **EP 4 753 106 A1**
(43) Date of publication of application: **03.06.2026**
(21) Application number: 25216700.2
(22) Date of filing: 18.11.2025
(51) Int. Cl.: H02J 7/70, H02J 50/00, H02J 50/10, H04R 1/1025

(54) **AN INDUCTIVELY CHARGEABLE HEARING DEVICE AND A CHARGING DEVICE**

(30) Priority: 28.11.2024 EP 24216006
(71) Applicant: GN Hearing A/S, 2750 Ballerup (DK)
(72) Inventor: ÖZDEN, Sinasi, 2750 Ballerup (DK)
(74) Representative: Zacco Denmark A/S

(57) **Abstract**

Disclosed is a system comprising a hearing device and a charging device. The charging device is configured for receiving the hearing device and further configured for inductive charging of the hearing device. The hearing device comprises a rechargeable battery arranged in connection with a receiver coil. The receiver coil is arranged in a hearing device housing. The receiver coil comprises a magnetic core and metal windings wound around the magnetic core. The charging device comprises at least one transmitter coil arranged in a charging device housing. The transmitter coil comprising metal windings are configured for charging of the hearing device. The transmitter coil is arranged to at least partly surround the receiver coil when the hearing device is received in the charging device.

## Description

### FIELD

The present invention relates to inductively chargeable hearing devices. More specifically, the disclosure relates to a system comprising an inductively chargeable hearing device and a charging device. Particularly, the disclosure relates to the hearing device configured to be inductively charged by the charging device.

### BACKGROUND

Traditional hearing devices often require frequent battery replacements or cumbersome wired charging system, which can be inconvenient for users. In the past few years, rechargeable batteries are replacing traditional batteries. In some cases, these rechargeable batteries are charged by removing the batteries from the hearing device and charging them with an external charger. Alternatively, the hearing device including the rechargeable batteries may be arranged in a casing for charging the rechargeable batteries of the hearing device. Such charging is often time consuming and inefficient due to poor coupling between the charging means in the charging casing and the hearing device.

Therefore, there is a need for an improved charging which will ensure fast and efficient charging of the rechargeable battery of the hearing device.

### SUMMARY

In order to have an effective inductive charging system charging coils should be highly effective with high Q-values. Also the coupling between the coils is important. The problem faced when it comes to hearing devices is that effective coils require a lot of space within the hearing device which are on the other hand very restricted by its small size.

It is therefore an object of embodiments of the present disclosure to provide an efficient charging of a hearing device by a charging device.

It is another object of the embodiments of the present disclosure to provide an efficient charging system of the hearing device and a charging device without affecting the size of both the charging device and hearing device.

It is a further object of the embodiments of the present disclosure to provide high Q-values of both hearing device charging coil and the charging device coil.

It is yet another object of the embodiments of the present disclosure to provide good coupling between the coils of the charging device and hearing device.

According to a first aspect a system comprising a hearing device and a charging device is provided. The charging device is configured for receiving the hearing device and further configured for inductive charging of the hearing device. The hearing device comprises a rechargeable battery arranged in connection with a receiver coil. The receiver coil is arranged in a hearing device housing. The receiver coil comprises a magnetic core and metal windings wound around the magnetic core. The charging device comprises at least one transmitter coil arranged in a charging device housing. The transmitter coil comprising metal windings is configured for charging of the hearing device. The transmitter coil is arranged to at least partly surround the receiver coil when the hearing device is received in the charging device.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The hearing device may be configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing device system, such as a binaural hearing aid system. The hearing device may be configured for communication with one or more other devices, such as configured for communication with another hearing device or with an accessory device or with a peripheral device.

The hearing device may be embodied in various housing styles or form factors. Some of these form factors are Behind-the-Ear (BTE) hearing device, Receiver-in-Canal (RIC) hearing device Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the output transducer may be comprised in the ITE unit, which is coupled to the BTE unit via a connector cable or electrical wire/tube configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, moulded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

The hearing device may comprise a hearing device antenna and a hearing device wireless communication unit. The hearing device may be configured for wired/wireless audio communication, e.g. enabling the user to listen to media, such as music or radio and/or enabling the user to perform phone calls.

The hearing device comprises a rechargeable battery. The rechargeable battery may form part of a power source and/or hearing device charging circuit of the hearing device. It is typically arranged inside the hearing device and configured to provide a first voltage to various components of the hearing device. The power source and/or hearing device charging circuit may comprise a power management unit, such as a hearing device power management unit. The hearing device power management unit may be configured to convert the first voltage into a second voltage. The power source and/or hearing device charging circuit may comprise a receiver charging element. The receiver charging element may be as a receiver coil. The rechargeable battery may be a replaceable battery. The rechargeable battery is configured to be charged by the charging device. The charging device may start charging the hearing device only upon insertion of the hearing device into the charging device.

The hearing device comprises a receiver coil. The receiver coil is arranged inside the hearing device, i.e. in a housing of the hearing device. The hearing device housing typically contains other hearing device components. The receiver coil may be placed anywhere within the housing, however, typically in a close proximity to the rechargeable battery. The rechargeable battery is arranged in connection with the receiver coil and the receiver coil is typically directly connected to the rechargeable battery, e.g. via a conducting wire.

The receiver coil may be arranged in a portion of the hearing device housing configured to be positioned in the ear of the user. The receiver coil may be arranged in an in-ear portion of the hearing device housing configured to be at least partly received in the user's ear canal or concha. Arranging the receiver coil in the in-ear portion of the housing of the hearing device reduces overall device size. Furthermore, arranging the receiver coil in the in-ear portion of the hearing device allows for hearing devices which do not comprise a stem portion.

The receiver coil comprises a magnetic core and metal windings wound around the magnetic core. In the present context, the receiver coil comprising the core and windings is to be interpreted according to any of the following: The magnetic core forms part of the receiver coil. The magnetic core defines a winding body around which the metal windings are directly wound, the core thereby forming an integral part of the receiver coil. The magnetic core is positioned inside the metal windings, as opposed to being located adjacent to the coil. The magnetic core, forming part of the receiver coil, is configured to contribute to capturing electromagnetic fields form the transmitter coil. The magnetic core is configured to increase inductance of the receiver coil. Also the windings contribute to the inductance of the receiver coil. Moreover, both the metal windings and the magnetic core work together and contribute to the inductance of the receiver coil.

Typically, the receiver coil comprising a magnetic core extends along a central axis, the coil windings being wound directly around the magnetic core such that the magnetic core is enclosed by the windings and increases the inductance of the coil compared to an equivalent air-core winding.

The magnetic core may be made of ferromagnetic metal such as iron, or ferrimagnetic compounds such as ferrites. The magnetic core may be a rod-shaped magnetic core and the metal windings would be wound around the rod. The rod-shaped magnetic core may be a solid rod, i.e. a rod without a central hole running through it. The rod-shaped magnetic core may extend longitudinally along a central axis of the receiver coil, such that the metal windings concentrically surround the magnetic core. Typically, the magnetic core is not a formed to be in a form for a hollow structure, nor in a form of a foil around which the windings may be wound. In general, the magnetic core may be a solid ferrite rod.

The combination of the magnetic core and metal windings ensures increased inductance and high Q-values of the receiver coil and thus high coupling efficiency with the transmitter coil while keeping the size of the receiver coil to minimum. Furthermore, the magnetic core loads the windings and thereby ensures high inductance, i.e. several times higher compared to the windings without the magnetic core. High inductance also allows miniaturization of the receiver coil. Additionally, the windings wound around the magnetic core do not need to be very long because the high inductance can be achieved with lower number of turns thanks to the magnetic core. Also the magnetic core acts as a part of the coil and captures the magnetic field from the transmitter coil. This also allows for miniaturization of the receiver coil. It is important to have a small receiver coil as it should take up as little space in the hearing device as possible. Also, when the receiver coil is small, it is easier to arrange it in the hearing device.

The magnetic core may be made of, e.g., various materials made of NiZn ferrite and designed for different frequency ranges, or various materials made of MnZn ferrite and designed for different frequency ranges and having relative permeability ranging from 100 up to 20.000. The metal windings may be wound around the core such that they completely cover the core from its bottom to the top. Alternatively, the metal windings may partially cover the core, such as only one half of the core. The metal windings may be densely wound around the core such that each winding contacts the neighboring winding. Alternatively, the metal windings may form a spiral around the core such that the neighboring windings do not touch. Density of the windings together with the length of the core may define the total number of windings of the receiver coil. The Q-value of the receiver coil typically depends on the number of windings and/or the magnetic core, its length, relative permittivity, and/or diameter.

The charging device is configured to receive the hearing device to enable charging of the hearing device. The charging device may comprise a cavity for placement of the hearing device, i.e., the hearing device may be received in the cavity formed in the charging device. The charging device may be a charging casing for the hearing device. The charging device may equally be termed a charger. The charging device may be configured to receive one or more hearing devices and enable simultaneous charging of those hearing devices.

The charging device comprises at least one transmitter coil. The transmitter coil is typically arranged inside a charging device housing. The transmitter coil also comprises metal windings. The transmitter coil is typically an air coil, i.e., the metal windings stand without a magnetic core. The air coil defines a volume of space inside the coil such that the hearing device, and in particular the receiver coil can be arranged in the volume of space formed by the air coil, once the hearing device is placed into the charger. Magnetic fields are created in the transmitter coil, received by the receiver coil, and converted by the receiver coil into electrical power for powering the hearing device and its components. The transmitter coil, i.e., its metal windings may take various cross-section, such as an oval cross-section, or a rectangular cross-section, circular cross-section, rhomboidal cross-section, etc., as long as such cross-section ensures that the transmitter coil is arranged to at least partly surround the receiver coil when the hearing device is received in the charging device. In other words, the receiver coil is at least partly disposed inside the transmitter coil when the hearing device is in the charger. The transmitter coil forms a volume of space. When the hearing device is arranged in the charger, the receiver coil is at least partly inside said volume of space. In other words, only a portion of the magnetic core together with typically only one portion of the windings may overlap with said volume of space.

In the present context the feature "at least partly surround" is used to describe a physical relationship between the transmitter coil and the receiver coil and it is intended to describe that the transmitter coil at least partly physically encloses the receiver coil, i.e. at least partly encircles the receiver coil, i.e. at least partly encompasses the receiver coil in space, i.e. the receiver coil is at least partly within the transmitter coil, i.e. the receiver coil at least partly fits inside the transmitter coil when the hearing device is placed in the charger.

In some implementations, the entire receiver coil may be placed in the transmitter coil, i.e. in the volume of space defined by the transmitter coil. The transmitter coil may be understood as a solenoid generating a magnetic field to which the receiver coil can couple. When an electric current is passed through the solenoid, a homogeneous field, i.e. a uniform magnetic field, will be created in the volume of space defined inside the solenoid. Thus, the receiver coil may be placed anywhere inside the solenoid and experience the same magnetic field. Additionally, at least one more receiver coil may be placed inside the solenoid and both receiver coils will couple to the magnetic field of the transmitter coil. Thereby, flexibility in designing both the charger and the hearing device is provided.

According to the present disclosure, the transmitter coil at least partly encloses the receiver coil when the hearing device is placed in the charger. The larger the overlap between the receiver coil with the volume of space defined by the transmitter coil the more efficient coupling of the magnetic fields is achieved. In cases when the whole receiver coil is encircled by the transmitter coil and when the central axes of the coils are parallel, the coupling efficiency is maximized and thereby the inductive charging of the receiver coil.

By placing at least a part of the receiver coil inside the transmitter coil it is ensured that the receiver coil couples into the electromagnetic field of the transmitter coil thereby ensuring transfer of electromagnetic field and thereby charging of the hearing device. Preferably, when at least 10% of the receiver coil is surrounded by the transmitter coil charging of the hearing device is enabled.

Generally, the charging device comprises one or more cradles configured to accommodate one or more hearing devices during charging. The charging device may comprise a single transmitter coil arranged to at least partly surround the cradle(s) and thereby the receiver coil(s) of one or more hearing devices regardless of the exact position of the hearing device within the cradle. The receiver coil may be arranged in the in-ear portion of the hearing device and the cradle may be formed to generally receive the in-ear portion of the hearing device. In this way, the hearing device does not need to be placed in a predetermined orientation or in a specifically shaped cavity, but rather may be positioned freely within the cradle while still ensuring efficient inductive coupling between the transmitter coil of the charging device and the receiver coil of the hearing device, thanks to homogeneous electromagnetic field inside of the transmitter coil. The cradle may therefore be formed with a simple cavity that merely ensures that the hearing device is accommodated and retained during charging, without requiring precise alignment features or dedicated fitting structures matching the external shape of the hearing device. Such a configuration simplifies the design of the charger, reduces the need for precise mechanical tolerances, allows the same charger design to be used with different hearing device models, and thereby contributes to reduced manufacturing costs while still providing reliable and efficient charging performance.

The charging device may be plugged into an electric socket to thereby enable charging of the hearing device. Alternatively, the charging device may be configured to store power which is then transferred to the hearing device once charging is initiated. The charging device may be configured to receive two hearing devices and enable their charging simultaneously or alternatingly. In any of those implementations, the charging device is configured to inductively charge the hearing device(s), i.e., to wirelessly charge the hearing device through electromagnetic induction such that energy transfer from the charger to the hearing devices is performed without the need for direct electrical contact. The charging relies on electromagnetic fields transferring power between the charging device and the hearing device, and in particular between the transmitter coil and the receiver coil.

The charging device may comprise a charging device charging circuit. The charging device charging circuit may comprise a power management unit. The charging device power management unit may be configured to convert a third voltage into the first voltage, wherein the third voltage is received by the charging device and the first voltage is provided by the charging device to the hearing device.

In an embodiment, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In an embodiment, the hearing device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In an embodiment, the hearing device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the hearing device. One or more of the input transducer(s) may be comprised in an ITE unit or in an earpiece.

In an embodiment, the hearing device may comprise a wireless communication unit configured for converting an electric output signal into a wireless output signal. The wireless output signal may comprise synchronization data. The hearing device wireless communication unit may be configured for transmitting the wireless output signal via at least one of the one or more hearing device antennas.

In an embodiment, the hearing device may comprise a vent. A vent is a physical passageway such as a canal or tube primarily placed to offer pressure equalization across a housing placed in the ear such as an ITE hearing device, an ITE unit of a BTE hearing device, a CIC hearing device, a RIE hearing device, a RIC hearing device, a MaRIE hearing device or a dome tip/earmold. The vent may be a pressure vent with a small cross section area, which is preferably acoustically sealed. The vent may be an acoustic vent configured for occlusion cancellation. The vent may be an active vent enabling opening or closing of the vent during use of the hearing device. The active vent may comprise a valve.

In an embodiment, the hearing device may comprise a memory, including volatile and nonvolatile forms of memory.

When the transmitting coil is fed with a current, the transmitting coil generates a magnetic field. The magnetic field of the transmitting coil is substantially a magnetic field of a solenoid running through the center of the transmitting coil along its longitudinal axis and circles back around the outside of the transmitting coil. The receiver coil may at least partly be confined in the magnetic field of the transmitting coil. In particular, the receiver coil is at least partly overlapping with the field lines running through the transmitting coil. By having the receiver coil at least partly confined in the magnetic field of the transmitting coil, a current will be induced in the receiver coil by the magnetic field of the transmitting coil. In this way, charging of the hearing device is achieved. Depending on the percentage of the confinement, i.e., depending on a portion of the receiver coil overlapping with the magnetic field of the transmitter coil, coupling efficiency will vary and thereby the charging speed. Normally, the greatest the overlap is the higher the coupling efficiency is and thereby the charging speed.

The entire receiver coil may be arranged inside the transmitter coil, when the hearing device is arranged in the charger. In order to optimize coupling efficiency, the receiver coil may be arranged in the hearing device such that when the hearing device is received in the charging device, the entire receiver coil will be surrounded by the transmitting coil. In such implementation, the entire receiver coil is physically surrounded by the transmitting magnetic field and thereby it can best couple to it. The receiver coil has its central axis extending along the length of the coil, typically along the length of the magnetic core. The transmitter coil also has its central axis extending through the center of the coil and along the longitudinal dimension of the coil. The two central axis may be substantially parallel to each other and in this scenario coupling of the receiver coil into the magnetic field of the transmitting coil is maximized. In some implementations, the two central axis may not be parallel to each other, what normally goes on the expense of coupling efficiency.

The transmitter coil may be an air coil. In the present context, the term air coil is to be interpreted as a coil having only air inside the windings, i.e. a hole inside the coil has no magnetic core. By omitting the core from the transmitter coil, more space is available for the receiver coil to be arranged in the transmitter coil. The windings are typically insulated conducting wires typically wound closely together, i.e. each loop of wire may touch the neighboring one. By having the windings tightly packed, larger number of windings can be implemented in a smaller space. Thus, the space in the charger is optimized while the Q-value is maximized. Also, tightly packed windings may provide a higher coupling with the receiver coil, thereby improving coupling efficiency and thus faster charging.

The transmitter coil typically has a diameter which can be measured perpendicular to its central axis, i.e. longitudinal central axis. Similarly, a diameter for the receiver coil can be defined and can be measured perpendicular to its central axis (also longitudinal central axis typically running lengthwise through the magnetic core). The diameter of the transmitter coil is typically larger than the diameter of the receiver coil. The diameter of the transmitter coil may be at least five times larger than the diameter of the receiver coil. For instance, the diameter of the transmitter coil may be around 20 mm while the diameter of the receiver coil may be around 4 mm. The diameter of the transmitter coil may be at least ten times larger than the diameter of the receiver coil. For instance, the diameter of the transmitter coil may be around 20 mm while the diameter of the receiver coil may be around 2 mm. The diameter of the transmitter coil may be at least twenty times larger than the diameter of the receiver coil. For instance, the diameter of the transmitter coil may be around 20 mm while the diameter of the receiver coil may be around 1 mm. In embodiments where the transmitter coil is arranged to surround two hearing devices inserted into the charger, the diameter of the transmitter coil may be more than 40 mm. By having the diameter of the transmitter coil considerably larger than the diameter of the receiver coil it is ensured that the receiver coil can at least partly be surrounded by the transmitter coil and the hearing device inserted in the cavity of the charging device. A particularly large enclosed volume (in particular with a particularly large cross section of the transmitter coil) results in high coupling efficiency with the hearing device, i.e. with the receiver coil windings wound around the magnetic core.

The transmitter coil typically has a height which can be measured along its central axis. Similarly, a height for the receiver coil can be defined and may be measured along its central axis. Typically, the height of the transmitter coil is larger than the height of the receiver coil. The height of the transmitter coil may be at least 1mm longer than the height of the receiver coil, e.g., the transmitter may be 10 mm tall while the receiver coil may be 7 mm tall, or only 6-5 mm tall, such as 5.7 mm tall. By having the height of the transmitter coil considerably larger than the height of the receiver coil it can be ensured that the receiver coil can be completely surrounded by the transmitter coil.

The magnetic core of the receiver coil can be characterized by a diameter which can be measured perpendicular to its central axis and by a height which can be measured along its central axis. A ratio of the magnetic core diameter to its height may be at least 1:1.5. In other words, the magnetic core, and thus the receiver coil is typically taller than wider. The receiver coil may be 4 mm in diameter and around 7 mm in height. It may even be only 2 mm in diameter and around 6 mm in height. It was also calculated that the receiver coil even as small as 1 mm in diameter and around 5.7 mm in height provides satisfactory coupling efficiency and charging efficiency. As the hearing devices are typically small, it is advantageous to have as small receiver coil as possible. As the magnetic core typically defines the number of windings of the receiver coil as well as its overall size, by having the magnetic core smaller in diameter than in its height the receiver coil can be sufficiently small while a significant number of windings can be implemented to ensure a high charging efficiency. However, large number of windings is not needed as the magnetic core improves the Q-value of the receiver coil on its own, i.e. even without a large number of windings.

The transmitter coil can be characterized by its diameter which can be measured perpendicular to its central axis, i.e., longitudinal central axis, and its height which is measured along the central axis. Typically, a ratio of the transmitter coil diameter to its height may be at least 1:1, such as 1.5:1, such as 2:1. The transmitter coil may be 15 mm in both diameter and height. The transmitter coil may be 20 mm in diameter and 10 mm tall. The transmitter coil may be 30 mm in diameter and 10 mm tall. Having a diameter of the transmitter coil larger than its height allows for flexibility in designing the charger and its cavities for receiving the hearing devices. Q-value can still be kept high with densely packed windings.

The transmitter coil and receiver coil may be concentric when the hearing device is received in the charging device. In other words, the two coils may share the same center point. However, the two coils may be tilted with respect to each other. The transmitter coil and receiver coil may be coaxial when the hearing device is received in the charging device. In other words, the two coils may share the same center axis. Different mutual orientation between the two coils allows for size and design optimization of both the hearing device and the charging device, while still ensuring a high charging efficiency. However, it should be noted that the receiver coil may take any orientation with respect to the transmitter coil, as long as there is at least partial overlap with the transmitter coil.

The central axis of the transmitter coil and the central axis of the receiver coil may form an angle when the hearing device is received in the charging device. The angle may be in the range of 0 and 90 degrees. This relative tilting angle typically influences the coupling efficiency between the two coils, and thus charging of the receiver coil. It should be noted that the overlap of the coils and relative positioning, i.e. tilting and placement, of the receiving coil with respect to the transmitter coil are degrees of freedom which can be manipulated to optimize the charging efficiency without influencing the size of either the hearing device nor the charging device.

A ratio between transmitter coil windings and receiver coil windings may be 1:1, such as 2:1, such as 3:1. In other words, the transmitter coil will have at least equal and typically larger number of windings than the receiver coil. In this way it can be ensured that the transmitter coil can surround the entire receiver coil. The winding ratio between the transmitter coil and the receiver coil larger than 1:1 typically helps reducing loss in the transmitter coil. However, it is also possible to implement the receiver coil with larger number of windings compared to the number of windings of the transmitter coil by choosing different winding density.

The operating frequency of the transmitter and receiver coils may range from 100 kHz to 20 MHz. The operating frequency may be 13.6 MHz. The operating frequency may be 135 kHz. Q-values of the coils may depend on the operating frequency. A selection of the operating frequency may depend on a material used for the magnetic core of the receiver coil. Additionally, the operating frequency may also be selected on the basis of the material used for the windings for both the transmitter coil and the receiver coil. Furthermore, the operating frequency used for charging may be selected in connection with any possible additional use of the charging coils.

The hearing device may be a hearing aid. The hearing aid may be any type known in the art such as a behind-the-ear (BTE) hearing aid, an in-the-ear (ITE) hearing aid, a receiver-in-the-ear (RIE) hearing aid, and the like. As it is known in the art, the hearing aids are very small devices and special care is taken when designing each component for the hearing aid. Having a receiver coil in accordance with the present disclosure, it is possible to ensure efficient wireless charging of the hearing aid without compromising the small size of the hearing aids.

The transmitter coil may be configured for transmitting data to the hearing device. In other words, the transmitter coil may have dual purpose, i.e. to charge the hearing device by transmitting energy to the receiver coil of the hearing device, and to transmit data to one of the hearing device antennas. The transmitter coil may operate at a single frequency and perform both the charging of the hearing device and data transmission to the hearing device at the single operating frequency. Alternatively, the transmitter coil may be configured to operate at two different frequencies, one for data transmission and the other one for charging. It is advantageous to have a multi-purpose transmitter coil in order to save space in the charger and thereby improve its compactness. Also, it is advantageous to be able to transmit data from the charger to the hearing device during charging as the charger, e.g., may have more storage memory for storing data relevant for the hearing device, such as data for programming the hearing device. The transmitter coil may operate at 13.56 MHz which is currently used for point-to-point communication between Bluetooth devices and may additionally be used for charging of the hearing device.

The hearing device may comprise a receiver, such as a hearing device loudspeaker. The receiver coil may be arranged in a close proximity to the receiver. The receiver may be a receiver of a hearing aid, such as a BTE hearing aid, an ITE hearing aid, a RIE hearing aid, etc. The receiver coil may be placed beneath the receiver of the hearing device. Often, the hearing devices may have space available in a close proximity to the receiver and therefore it may be advantageous to place the charging coil for the hearing device close to the receiver. As the receiver coil is substantially smaller than the hearing device receiver, it is ensured that the receiver is not disturbed by the magnetic field of the coil.

Some hearing aids comprise a telecoil typically placed beneath the hearing aid receiver. As the telecoil technology is slowly phased out, the telecoils in the hearing aids may be replaced by a receiver coil for inductive charging of the hearing aids.

The charging device may comprise a lid and a body. A cavity for receiving the hearing device may be formed by both the lid and the body.

The transmitting coil may be arranged in the lid of the charging device. Alternatively, the transmitter coil may be arranged in the body of the charging. Regardless of whether the transmitter coil is arranged in the lid or in the body, according to the present disclosure, it is ensured that the receiver coil of the hearing device is at least partly surrounded by the transmitter coil.

The system may comprise a first hearing device and a second hearing device, such as a first hearing aid and a second hearing aid, or a first earbud and a second earbud.

The charging device may comprise a first cavity and a second cavity configured to receive a first hearing device and a second hearing device, respectively. In this way, two hearing devices can be charged simultaneously.

The charging device may comprise only one transmitting coil arranged such that the receiver coils of both the first hearing device and the second hearing device are at least partly surrounded by the transmitting coil during charging, i.e., when received in the corresponding cavities. The transmitting coil may be arranged either in the lid or in the body of the charger. In another implementation, the charging device may comprise a first transmitter coil and a second transmitter coil configured for performing charging of the first hearing device and the second hearing device, respectively. Typically, the charging device configured to receive two hearing devices for charging will be symmetrical such that one cavity will be arranged on one side of the axis of symmetry and the other cavity will be arranged on the other side of the axis of symmetry. The transmitter coils will typically be arranged to surround the cavities. The transmitter coils may be arranged in the lid or in the body of the charger. Thereby, it is ensured that the transmitter coils will at least partly surround the receiver coils arranged in the hearing devices.

The receiver coil may comprise a thin ferrite core, such as thin as 4 mm in diameter or less. The ferrite core may have windings wound around it. The charging coil of the charger may have a diameter about 20 mm to be able to produce a high field for charging the receiver coil and at the same time a good coupling with the receiver coil. The coils may operate at NFC frequency of 13.56 MHz. When the hearing device is a BTE hearing aid, the receiver coil may be placed beneath the receiver of the BTE device.

In one embodiment, the transmitter coil may be around 20 mm in diameter and around 10 mm in height. The receiver coil may be around 4 mm in diameter and 7 mm in height. The magnetic core may have a relative permittivity of around 10.000. The operating frequency may be 135 kHz. It is noted that this embodiment may include features described above in connection with both the receiver coil and the transmitter coil and their relative placement during charging of the hearing device.

In another embodiment, the transmitter coil may be around 20 mm in diameter and around 10 mm in height. The receiver coil may be around 4 mm in diameter and 7 mm in height. The magnetic core may be made of a ferrite material. The ferrite material may have a relative permittivity of around 120. The operating frequency may be 13.56 MHz. It is noted that this embodiment may include features described above in connection with both the receiver coil and the transmitter coil and their relative placement during charging of the hearing device.

In yet another embodiment, the transmitter coil may be around 20 mm in diameter and around 10 mm in height. The receiver coil may be around 2 mm in diameter and 5.7 mm in height. The magnetic core may have a relative permittivity of around 120. The magnetic core may be made of a ferrite material. The operating frequency may be 13.56 MHz. It is noted that this embodiment may include features described above in connection with both the receiver coil and the transmitter coil and their relative placement during charging of the hearing device.

In yet another embodiment, the transmitter coil may be around 20 mm in diameter and around 10 mm in height. The receiver coil may be only around 1 mm in diameter and 5.7 mm in height. The magnetic core may have a relative permittivity of around 120. The magnetic core may be made of a ferrite material. The operating frequency may be 13.56 MHz. It is noted that this embodiment may include features described above in connection with both the receiver coil and the transmitter coil and their relative placement during charging of the hearing device.

The embodiments of the present disclosure provide high charging efficiency while both coils, and in particular the hearing device coil, are small thereby ensuring improved integration into existing hearing and charging devices. The charging device coil provide large flexibility regarding exact placement of the hearing device(s) during charging thereby providing improved usability of the charging system. It is also worth noting that as the receiver coil's magnetic core can be as small as 4 mm in diameter or less, it has negligible impact on the surrounding components of the hearing device.

The present invention relates to different aspects including the system comprising the hearing device and the charging device, the system described above and in the following, and corresponding charging device and the method of charging a hearing device in a charging device, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an exemplary embodiment of the system according to the present disclosure.
Fig. 2 schematically illustrates an exemplary embodiment of the receiver and transmitter coil according to the present disclosure.
Fig. 3 schematically illustrates yet another exemplary embodiment of the receiver and transmitter coil according to the present disclosure.
Fig. 4 schematically illustrates an exemplary embodiment of the hearing device according to the present disclosure.
Fig. 5 schematically illustrates an exemplary embodiment of the system according to the present disclosure.
Fig. 6 schematically illustrates yet another exemplary embodiment of the system according to the present disclosure.
Fig. 7 schematically illustrates yet another exemplary embodiment of the system according to the present disclosure.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

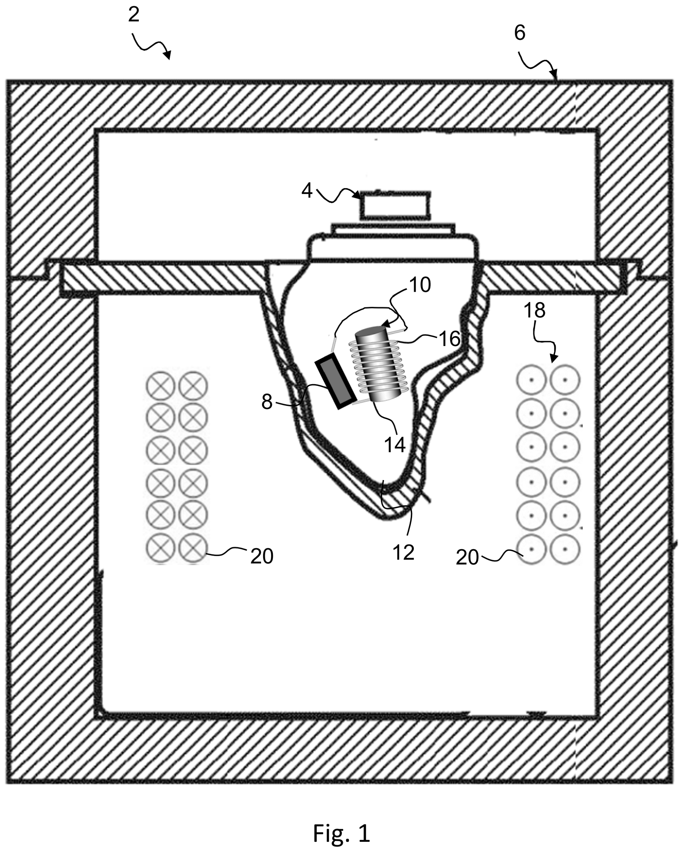

Fig. 1 schematically illustrates an exemplary embodiment of the system 2 according to the present disclosure. The system 2 comprises a hearing device 4 and a charging device 6. The charging device 6 is configured for receiving the hearing device 4 and further configured for inductive charging of the hearing device 4. The hearing device 4 comprises a rechargeable battery 8 arranged in connection with a receiver coil 10. The receiver coil 10 is arranged in a hearing device housing 12. The receiver coil 10 comprises a magnetic core 14 and metal windings 16 wound around the magnetic core 16. The charging device 6 comprises at least one transmitter coil 18. The transmitter coil is typically arranged in a charging device housing. The transmitter coil 18 comprises metal windings 20. The transmitter coil 18 is configured for charging of the hearing device. More precisely the metal windings 20 of the transmitter coil 18 are configured to electromagnetically couple with the receiver coil of the hearing device to thereby enable charging of the hearing device 4. The transmitter coil 18 is arranged to at least partly surround the receiver coil 10 when the hearing device 4 is received in the charging device 6.

Typically, and as illustrated on Fig. 1, the receiver coil 10 may be arranged in a portion of the hearing device housing configured to be positioned in the ear of the user. Arranging the receiver coil 10 in the in-ear portion of the housing of the hearing device typically reduces overall device size. Furthermore, arranging the receiver coil in the in-ear portion of the hearing device allows for hearing devices which do not comprise a stem portion (not shown in Fig. 1). The stem portion is to be understood as a portion of the hearing device extending outside of the ear, typically forming an elongated structure extending from the portion of the housing configured to be position in the ear of the user. The stem portion may accommodate various electronic components, such as microphone(s), control circuitry, etc.

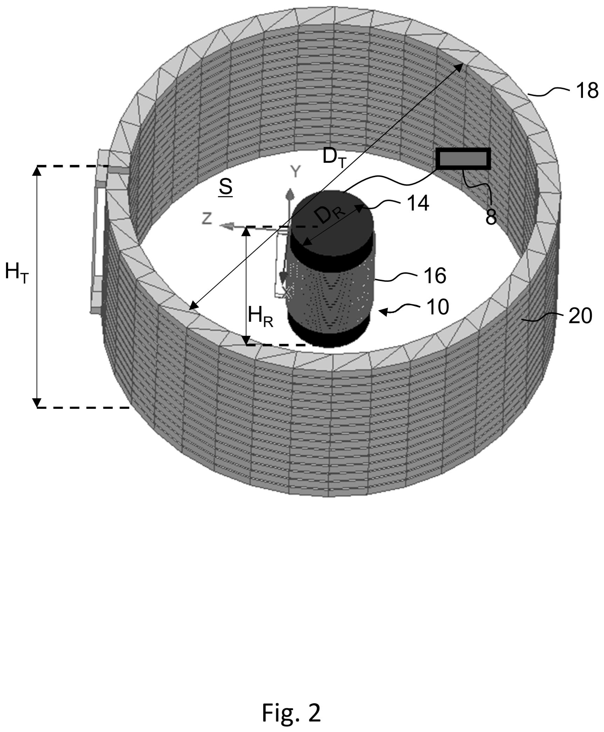

Fig. 2 schematically illustrates an exemplary embodiment of the receiver and transmitter coil according to the present disclosure. For simplicity, the hearing device and the charging device are not shown. The transmitter coil 18 is an air coil allowing flexibility in placement of the receiver coil. In this embodiment, the receiver coil 10 is completely surrounded by the transmitter coil 18 when the hearing device is arranged in the charging device for charging. The rechargeable battery 8 is connected to the windings 16 of the receiver coil wound around the magnetic core 14. The magnetic core 14 defines a winding body around which the metal windings 16 are directly wound, the core thereby forming an integral part of the receiver coil. The magnetic core 14 is illustrated as a solid rod. The transmitter coil 18 forms a solenoid and defines a volume of space S inside the solenoid. When the hearing device is placed into the charger for charging, the receiver coil 10 will be arranged inside the volume of space S. As the receiver coil 10 is completely surrounded by the transmitter coil 18, the height H_{R} of the magnetic core 14 is typically smaller (or at most the same) than the height H_{T} of the transmitter coil. Also, the diameter D_{T} of the transmitter coil is larger than the diameter D_{R} of the receiver coil. In the example shown in Fig. 2, the receiver coil is arranged fairly centrally inside the transmitter coil and the coils are substantially coaxial. In other examples, the receiver coil may be placed anywhere within the volume of space S defined by the transmitter coil, as the magnetic field generated by the transmitter coil inside the solenoid is substantially homogeneous when an electric current is running through the windings. The coupling between the coils is typically not affected by the placement of the receiver coil inside the transmitter coil. Furthermore, the receiver coil may take other orientations inside the solenoid, i.e. the central axis of the transmitter coil and the central axis of the receiver coil my form an angle when the hearing device is received in the charging device, the angle being in the range of 0 and 90 degrees.

In the example shown in Fig. 2, the magnetic core 14 is only partially covered by the windings 16. The receiver coil windings 16 are densely wrapped around the core. In other implementations, the magnetic core 14 may be completely covered by the windings. The windings may be densely wrapped or may form a helical structure in which neighboring windings do not touch each other.

In some examples, the transmitter coil may accommodate more than one hearing device, i.e. more than one receiver coil. In some other examples, the charging device may comprise more than one transmitter coil each being configured to receive one hearing device, and thus receiver coil.

The embodiments of the present disclosure provide high charging efficiency thanks to the specific relative arrangement of the two coils and thanks to the common contribution of the magnetic core and the windings of the receiver coil which drastically improves inductance and the Q-factor of the receiver coil. High charging efficiency is achieved while both coils, and in particular the hearing device coil, are small thereby ensuring improved integration into existing hearing and charging devices. The charging device coil 18 provides large flexibility regarding exact placement of the hearing device(s) during charging thereby providing improved usability of the charging system. It is also worth noting that as the receiver coil's magnetic core can be as small as 4 mm in diameter or less, it has negligible impact on the surrounding components of the hearing device.

The operating frequency of the transmitter and receiver coils may range from 100 kHz to 20 MHz. The operating frequency may be 13.6 MHz. The operating frequency may be 135 kHz. Q-values of the coils may depend on the operating frequency. A selection of the operating frequency may depend on a material used for the magnetic core of the receiver coil. The magnetic core 14 may be a ferrite rod. Additionally, the operating frequency may also be selected on the basis of the material used for the windings for both the transmitter coil and the receiver coil. Furthermore, the operating frequency used for charging may be selected in connection with any possible additional use of the charging coils.

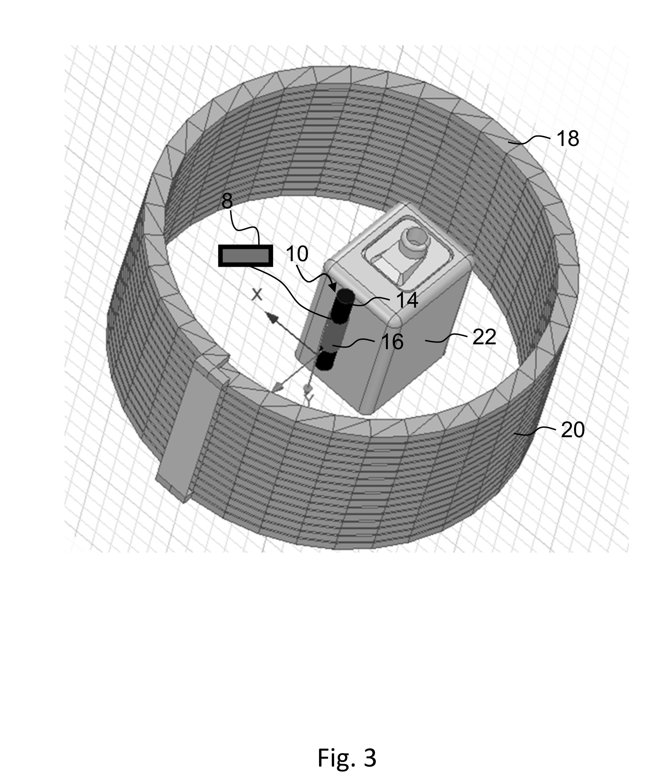

Fig. 3 schematically illustrates yet another exemplary embodiment of the of the receiver and transmitter coil according to the present disclosure. To avoid repetition, we hereby refer to Fig. 2 and its description presented above. In addition to the features explained in connection with Fig. 2, Fig. 3 illustrates an implementation in which the receiver coil 10 is arranged in a close proximity to a hearing device receiver 22, such as a loudspeaker. Often, the hearing devices may have space available in a close proximity to the receiver and therefore it may be advantageous to place the charging coil for the hearing device close to the receiver 22. As the receiver coil 10 is substantially smaller than the hearing device receiver 22, it is ensured that the receiver is not disturbed by the magnetic field of the coil 10.

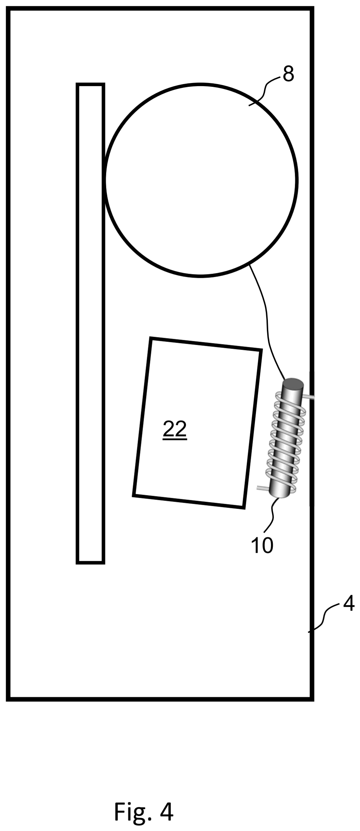

Fig. 4 schematically illustrates an exemplary embodiment of the hearing device 4 according to the present disclosure. The hearing device 4 may be a hearing aid. The hearing device comprises the rechargeable battery 8 connected to the receiver coil 10 placed in a close proximity to the receiver 22 of the hearing device.

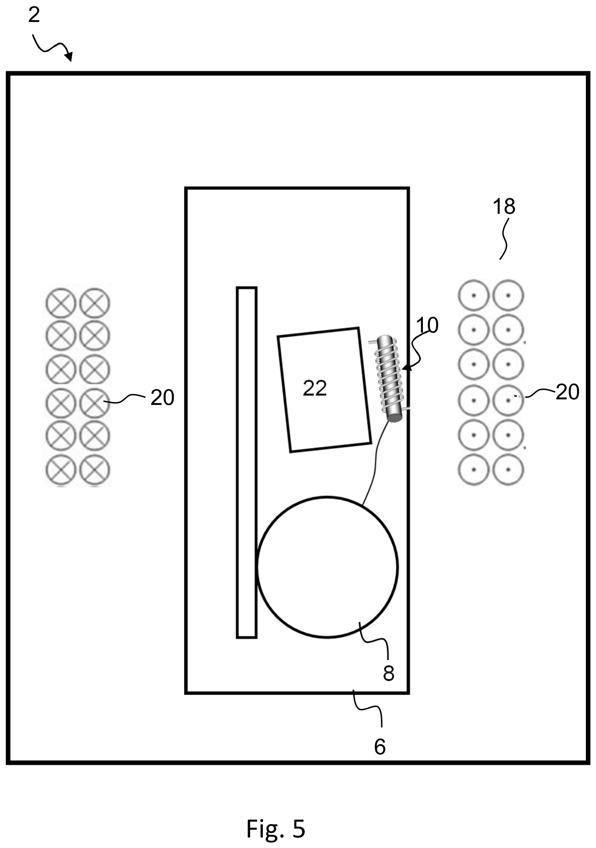

Fig. 5 schematically illustrates an exemplary embodiment of the system according to the present disclosure. Fig. 5 illustrates a cross-section of the hearing device of Fig. 4 placed into the charging device 6 comprising the transmitter coil 18. From Fig. 5 it can be seen that essentially, the transmitter coil is typically configured to receive at least a part of the hearing device together with the receiver coil 10. The receiver 22 may be a receiver of a hearing aid, such as a BTE hearing aid, an ITE hearing aid, a RIE hearing aid, etc. Often, the hearing devices may have space available in a close proximity to the receiver 22 and therefore it may be advantageous to place the receiver coil 10 for the hearing device close to the receiver. Some hearing aids comprise a telecoil typically placed beneath the hearing aid receiver. As the telecoil technology is slowly phased out, the telecoil in the hearing aid may be replaced by a receiver coil 10 to enable inductive charging of the hearing aids. In the example illustrated in Fig. 5, the receiver coil 10 is completely surrounded by the transmitter coil, i.e. the receiver coil is placed in the volume of space defined inside the transmitter coil 18 and its windings 20.

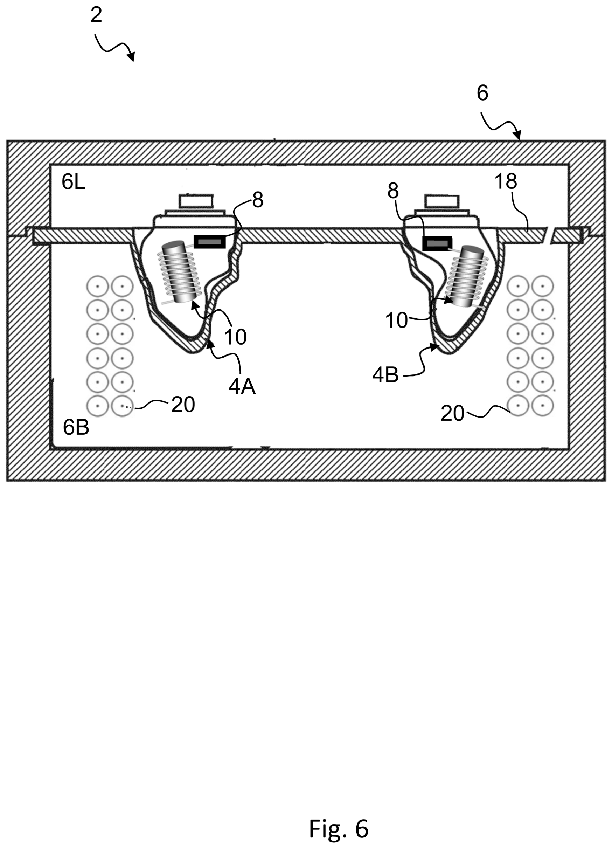

Fig. 6 schematically illustrates an exemplary embodiment of the system according to the present disclosure. Fig. 6 illustrates the system similar to the one illustrated in Fig. 1 with a difference that the charging device 6 is configured to receive two hearing devices, a first hearing device 4A and a second hearing device 4B each comprising a receiving coil and a battery 8. The transmitting coil 18 of the charging device is arranged such that it at least partly surrounds the receiver coils 10 of the first hearing device and the second hearing device. The charging device 6 comprises a lid 6L and a body 6B and cavities for receiving the hearing devices 4A and 4B are formed by both the lid 6L and the body 6B. In the example of Fig. 6, the transmitter coil is arranged in the charging device body 6B while the receiving coils 10 extend over both the body and the lid 6L when the hearing devices are placed in the charger. The receiving coils 10 are placed in the portion of the hearing devices 4A and 4B which are configured to be placed in the ear of the user. In another implementation, the transmitter coil 18 may be arranged in the lid 6L.

In yet another implementation, the receiver coils 10 may be placed in another part of the hearing device, e.g. stems of the hearing devices 4A, 4B. In yet another implementation, the receiver coils may be completely surrounded by the transmitter coil 18. In yet another implementation, the charging device may comprise two transmitter coils 18, a first transmitter coil arranged to at least partly surround the receiver coil 10 of the first hearing device 4A and a second transmitter coil arranged to at least partly surround the receiver coil 10 of the second hearing device 4B.

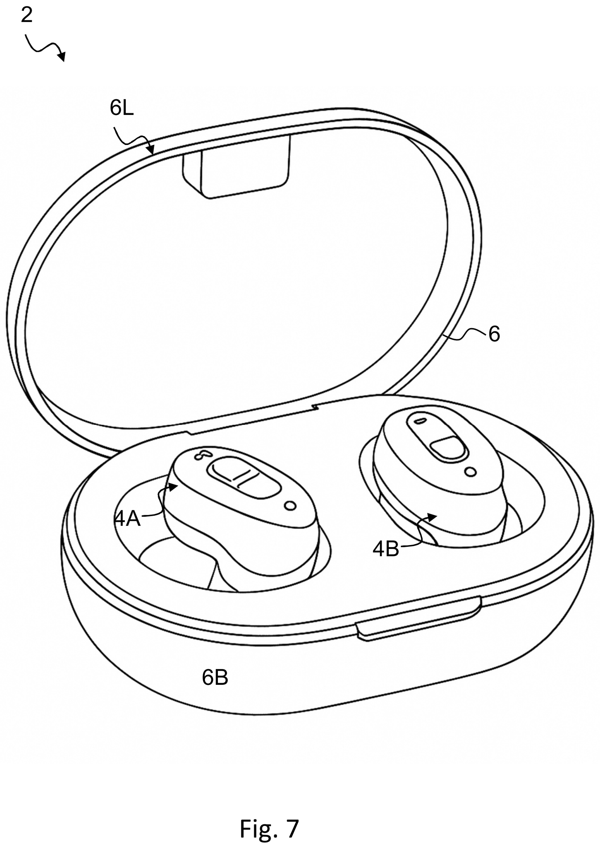

Fig. 7 schematically illustrates yet another exemplary embodiment of the system according to the present disclosure. Fig. 7 illustrates system 2A comprising a charging device 6A configured to receive two hearing devices, a first hearing device 4C and a second hearing device 4D each comprising a receiving coil and a battery (not shown). The hearing devices comprise a portion configured to be placed in the ear of a user and the receiving coil is arranged in that portion of the hearing device. The transmitting coil (also not shown) of the charging device is arranged such that it at least partly surrounds the receiver coils of the first hearing device and the second hearing device. The charging device 6A comprises a lid 6L and a body 6B and cradles for receiving the hearing devices 4C and 4D are formed in the body 6B. In such implementation, the hearing devices 4C and 4D do not need to be placed in a predetermined orientation, but rather may be positioned freely within the cradle while efficient inductive coupling is still ensured between the transmitter coil of the charging device 6A and the receiver coil of the hearing devices 4C, 4D. The cradle may therefore be formed with a simple cavity that merely ensures that the hearing devices are accommodated and retained during charging, without requiring precise alignment features or dedicated fitting structures matching the external shape of the hearing devices. Such a configuration simplifies the design of the charger 6A, reduces the need for precise mechanical tolerances, allows the same charger design to be used with different hearing device models, and thereby contributes to reduced manufacturing costs while still providing reliable and efficient charging performance.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A system comprising a hearing device and a charging device, the charging device is configured for receiving the hearing device and further configured for inductive charging of the hearing device,
   the hearing device comprises a rechargeable battery arranged in connection with a receiver coil,
   the receiver coil being arranged in a hearing device housing, the receiver coil comprising a magnetic core and metal windings wound around the magnetic core,
   the charging device comprises at least one transmitter coil, the transmitter coil comprising metal windings being configured for charging of the hearing device;
   wherein the transmitter coil is arranged to at least partly surround the receiver coil when the hearing device is received in the charging device.
1A. A system comprising a hearing device and a charging device, the charging device is configured for receiving the hearing device and further configured for inductive charging of the hearing device,
   the hearing device comprises a rechargeable battery arranged in connection with a receiver coil,
   the receiver coil being arranged in a hearing device housing, the receiver coil comprising a magnetic core and metal windings wound around the magnetic core, wherein the hearing device
   housing comprises a portion configured to be positioned in an ear of a user, and wherein the receiver coil is arranged in the portion of the hearing device housing configured to be positioned in the ear of the user,
   the charging device comprises at least one transmitter coil, the transmitter coil comprising metal windings being configured for charging of the hearing device;
   wherein the transmitter coil is arranged to at least partly surround the receiver coil when the hearing device is received in the charging device.
1B. The system according to item 1 or 1A wherein the magnetic core defines a winding body around which the metal windings are directly wound, the core thereby forming an integral part of the receiver coil.
2. The system according to items 1-1B, wherein the transmitting coil generates a magnetic field and wherein the receiver coil is at least partly confined in the magnetic field of the transmitting coil.
3. The system according to item 1 or 2, wherein the entire receiver coil is arranged inside the transmitter coil.
4. The system according to any of the preceding items, wherein the transmitter coil is an air coil.
5. The system according to any of the preceding items, wherein the transmitter coil has a diameter which is measured perpendicular to its central axis and the receiver coil has a diameter which is measured perpendicular to its central axis, and wherein the diameter of the transmitter coil is larger than the diameter of the receiver coil.
6. The system according to any of the preceding items, wherein the transmitter coil has a height which is measured along its central axis and the receiver coil has a height which is measured along its central axis, and wherein the height of the transmitter coil is larger than the height of the receiver coil.
7. The system according to any of the preceding items, wherein the magnetic core has a diameter which is measured perpendicular to its central axis and a height which is measured along the central axis, and wherein a ratio of the diameter to the height is at least 1:1.5.
8. The system according to any of the preceding items, wherein the transmitter coil has a diameter which is measured perpendicular to its central axis and a height which is measured along the central axis, and wherein a ratio of the diameter to the height is 1:1.
9. The system according to any of the preceding items, wherein the transmitter coil and receiver coil are concentric when the hearing device is received in the charging device.
10. The system according to any of the preceding items, the central axis of the transmitter coil and the central axis of the receiver coil form an angle when the hearing device is received in the charging device, the angle being in the range of 0 and 90 degrees.
11. The system according to any of the preceding items, wherein a ratio between transmitter coil windings and receiver coil windings is 1:1.
12. The system according to any of the preceding items, wherein the operating frequency of the transmitter and receiver coils ranges from 100 kHz to 20 MHz.
13. The system according to any of the preceding items, wherein the hearing device is a hearing aid.
14. The system according to any of the preceding items, wherein the transmitter coil is further configured for transmitting data to the hearing device.
15. The system according to any of the preceding items, wherein the hearing device comprises a receiver and wherein the receiver coil is arranged in a close proximity to the receiver.
16. The system according to any of the preceding items, wherein the charging device comprises a lid and a body, and wherein a cavity for receiving the hearing device is formed by both the lid and the body.
17. The system according to item 16, wherein the transmitter coil is arranged in the lid or in the body of the charging device.
18. The system according to any of the preceding items, wherein the charging device comprises a first cavity and a second cavity configured to receive a first hearing device and a second hearing device, respectively.
19. The system according to any of the preceding items, wherein the charging device comprises a first transmitter coil and a second transmitter coil configured for performing charging of the first hearing device and the second hearing device, respectively.

### LIST OF REFERENCES

- 2, 2A: system
- 4: hearing device
- 4A, 4B: first and second hearing device
- 4C, 4D: first and second hearing device
- 6, 6A: charging device
- 6L: charging device lid
- 6B: charging device body
- 8: rechargeable battery
- 10: receiver coil
- 12: hearing device housing
- 14: magnetic core
- 16: metal windings of the receiver coil
- 18: transmitter coil
- 20: metal windings of the transmitter coil
- 22: hearing device receiver

## Claims

1. A system comprising a hearing device and a charging device, the charging device is configured for receiving the hearing device and further configured for inductive charging of the hearing device,
the hearing device comprises a rechargeable battery arranged in connection with a receiver coil, the receiver coil being arranged in a hearing device housing, the receiver coil comprising a magnetic core and metal windings wound around the magnetic core,
the charging device comprises a transmitter coil, the transmitter coil comprising metal windings being configured for charging of the hearing device;
wherein the transmitter coil is arranged to at least partly surround the receiver coil when the hearing device is received in the charging device.

2. The system according to claim 1, wherein the transmitting coil generates a magnetic field and wherein the receiver coil is at least partly confined in the magnetic field of the transmitting coil.

3. The system according to claim 1 or 2, wherein the entire receiver coil is arranged inside the transmitter coil.

4. The system according to any of the preceding claims, wherein the transmitter coil is an air coil.

5. The system according to any of the preceding claims, wherein the transmitter coil has a diameter which is measured perpendicular to its central axis and the receiver coil has a diameter which is measured perpendicular to its central axis, and wherein the diameter of the transmitter coil is larger than the diameter of the receiver coil.

6. The system according to any of the preceding claims, wherein the transmitter coil has a height which is measured along its central axis and the receiver coil has a height which is measured along its central axis, and wherein the height of the transmitter coil is larger than the height of the receiver coil.

7. The system according to any of the preceding claims, wherein the magnetic core has a diameter which is measured perpendicular to its central axis and a height which is measured along the central axis, and wherein a ratio of the diameter to the height is at least 1:1.5.

8. The system according to any of the preceding claims, wherein the transmitter coil has a diameter which is measured perpendicular to its central axis and a height which is measured along the central axis, and wherein a ratio of the diameter to the height is 1:1.

9. The system according to any of the preceding claims, wherein the transmitter coil and receiver coil are concentric when the hearing device is received in the charging device.

10. The system according to any of the preceding claims, the central axis of the transmitter coil and the central axis of the receiver coil form an angle when the hearing device is received in the charging device, the angle being in the range of 0 and 90 degrees.

11. The system according to any of the preceding claims, wherein the operating frequency of the transmitter and receiver coils ranges from 100 kHz to 20 MHz.

12. The system according to any of the preceding claims, wherein the hearing device is a hearing aid.

13. The system according to any of the preceding claims, wherein the transmitter coil is further configured for transmitting data to the hearing device.

14. The system according to any of the preceding claims, wherein the hearing device comprises a receiver and wherein the receiver coil is arranged in a close proximity to the receiver.

15. The system according to any of the preceding claims, wherein the charging device comprises a lid and a body, and wherein a cavity for receiving the hearing device is formed by both the lid and the body, the transmitter coil being arranged in the lid or in the body of the charging device.
